# FASCICULE DE BREVET EUROPEEN

(11) **EP 3 177 507 B1**
(45) Date de publication et mention de la délivrance du brevet: **12.09.2018**
(21) Numéro de dépôt: 15744274.0
(22) Date de dépôt: 16.07.2015
(51) Int. Cl.: B62D 25/02, B62D 25/04, B62D 27/02, B62D 29/00

(54) **STRUCTURE DE VÉHICULE AVEC RENFORT ENTRE LONGERON ALUMINIUM ET PIED AVANT**
FAHRZEUGSTRUKTUR MIT VERSTÄRKUNG ZWISCHEN ALUMINIUMSCHWELLE UND VORDERER SCHARNIERSÄULE
VEHICLE STRUCTURE WITH REINFORCEMENT BETWEEN ALUMINIUM SILL AND FRONT HINGE PILLAR

(30) Priorité: 04.08.2014 FR 1457581
(43) Date de publication de la demande: 14.06.2017
(73) Titulaire: PSA Automobiles SA, 78300 Poissy (FR)
(72) Inventeur: COIFFIER, Frédéric, F-91310 Montlhery (FR); KOPEC, Franck, F-78000 Versailles (FR); LEFEVRE, Eric, F-91470 Limours (FR); TING, Andre, F-92800 Puteaux (FR)
(86) Numéro de dépôt international: PCT/FR2015/051955
(87) Numéro de publication internationale: WO 2016/020591

(56) Documents cités:
- EP-A1- 1 132 280
- FR-A1- 2 999 517
- US-B1- 6 283 539
- US-B1- 6 293 617

## Description

L'invention a trait au domaine des véhicules automobiles, plus particulièrement à la construction des structures ou caisses de véhicules automobiles.

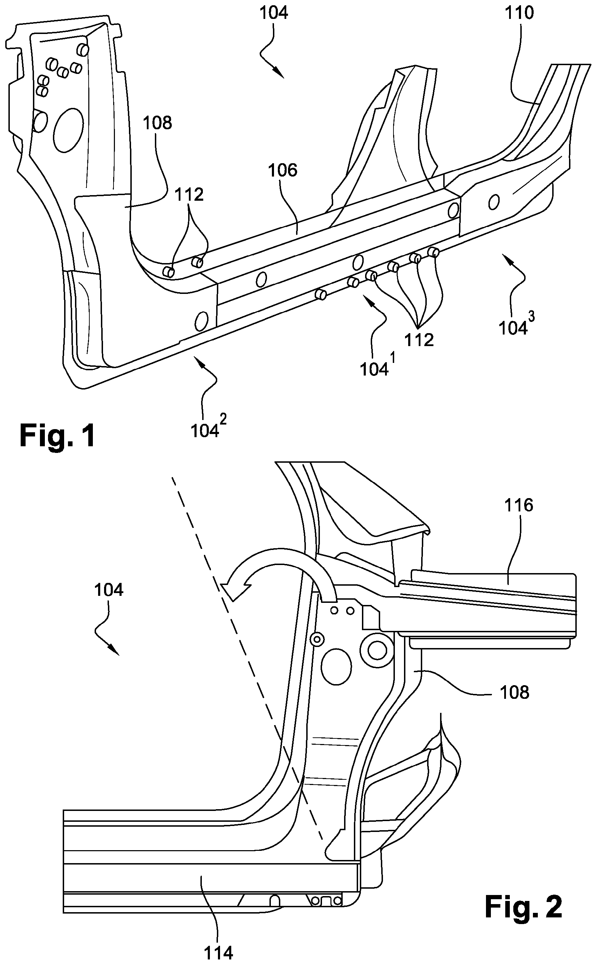

Le document de brevet publié FR 2 999 517 A1 divulgue une construction de longeron de bas de caisse de véhicule automobile dont une partie est constituée par un profilé en aluminium. Ce longeron est illustré à la figure 1. On peut observer que la portion centrale et généralement droite 104¹ du longeron 104 est réalisée par le profilé en aluminium 106 alors que les portions avant 104² et arrière 104³, comprenant notamment le pied ou poteau avant 108 et le pied ou poteau arrière 110, sont quant à elles réalisées de manière classique en tôle d'acier. La liaison entre le profilé 106 et les portions avant 104² et arrière 104³ ne sont pas détaillées dans cet enseignement. Il semble que chacune des portions avant 104² et arrière 104³ s'étende longitudinalement et recouvre une partie du profilé 106. Ces portions de longeron semblent être fixées au profilé par des moyens de fixation du type vissage ou rivetage 112. En cas d'impact à l'avant du véhicule, une partie de l'énergie d'impact est transmise par une voie de transmission dite supérieure, c'est-à-dire s'appuyant sur une partie supérieure du pied ou poteau avant 108. La liaison entre ce pied avant 108 et le profilé 106 constitue un point faible au point que le pied avant 108 peut se déformer en flexion à sa partie basse au point de déverser vers l'arrière.

Le document de brevet publié FR 2 923 203 B1 aborde le problème de renforcement d'un pied avant de structure de véhicule du type cabriolet et prévoit à cet effet une pièce de renforcement qui est formée avec un élément creux du pied avant, et ce par emboutissage à chaud. L'élément de renforcement forme la partie coudée du pied avant. Il est préalablement fixé par soudage à un flan de tôle qui est ensuite chauffé à 800°C-900°C pour être ensuite embouti et détouré. Le pied avant comprend ainsi un élément creux pourvu d'un élément de renforcement directement mis à forme avec l'élément creux. Cette solution est intéressante en ce qu'elle propose un renforcement de la portion coudée du pied avant. Elle n'est toutefois pas utile au renforcement d'un longeron selon l'enseignement précédent dont le point faible se situe au niveau de la liaison entre le profilé et le pied avant qui sont réalisés en des matériaux différents et incompatibles d'un point de vue métallurgique.

L'invention a pour objectif de proposer une construction de longeron de structure de véhicule automobile qui soit légère, rigide et apte à absorber de manière satisfaisante des chocs avant transmis par la voie supérieure de la structure.

L'invention a pour objet une structure de véhicule automobile, comprenant: au moins un longeron de bas de caisse comprenant un profilé en aluminium ou en alliage d'aluminium ; au moins un poteau en tôle d'acier s'étendant essentiellement verticalement depuis le longeron, une portion dudit poteau recouvrant une portion correspondante du profilé ; remarquable en ce qu'elle comprend, en outre, un renfort en tôle d'acier s'étendant entre la portion du poteau recouvrant le profilé et la portion correspondante du profilé, ledit renfort étant fixé par serrage et/ou engagement mécanique au profilé et par soudage au poteau.

L'étendue du renfort n'est préférentiellement pas limitée à la portion du poteau recouvrant le profilé et la portion correspondante du profilé. De manière préférentielle, il s'étend au-delà de cette portion de manière à pouvoir être fixé au poteau en des zones dudit poteau qui sont en dehors de la portion du poteau recouvrant le profilé.

Les soudures peuvent être ponctuelles ou linéiques. Elles sont préférentiellement du type à résistante électrique.

Le profilé en aluminium ou en alliage d'aluminium est préférentiellement extrudé. Il comprend préférentiellement une section constante.

Le poteau forme préférentiellement un coude relié au longeron. Le renfort est préférentiellement situé majoritairement dans le coude en question.

Selon un mode avantageux de l'invention, le poteau est un poteau avant s'étendant essentiellement verticalement depuis une extrémité avant du longeron. Le poteau avant est également couramment appelé pied avant.

Selon un mode avantageux de l'invention, le renfort s'étend majoritairement dans un plan vertical et longitudinal, ou formant un angle de moins de 10° avec chacune des directions verticale et longitudinale.

Selon un mode avantageux de l'invention, le poteau est formé par au moins deux éléments creux assemblés l'un à l'autre le long de bords formant une feuillure d'assemblage avant et une feuillure d'assemblage arrière, le renfort s'étendant dans la feuillure arrière et/ou dans la feuillure avant.

Selon un mode avantageux de l'invention, le renfort comprend au moins une encoche au niveau de la feuillure avant et/ou de la feuillure arrière, les bords des au moins deux éléments creux formant le poteau étant directement soudés l'un à l'autre dans ladite ou au moins une desdites encoches.

Selon un mode avantageux de l'invention, les bords des au moins deux éléments creux formant le poteau forment avec un bord inférieur du profilé une feuillure d'assemblage inférieure, ledit bord du profilé comprenant au moins une encoche et le renfort comprenant au moins une patte s'étendant essentiellement verticalement dans ladite feuillure en face de ladite ou desdites encoches, respectivement, de manière à être soudée(s) à l'élément creux du poteau disposé du côté du bord du profilé opposé au renfort.

Selon un mode avantageux de l'invention, le profilé comprend un bord supérieur formant, avec les bords des éléments creux formant le poteau, une feuillure d'assemblage supérieure, ledit bord du profilé comprenant au moins une encoche dans laquelle ou lesquelles le bord de l'élément creux situé latéralement du côté intérieur est soudé directement à l'élément creux situé latéralement du côté extérieur ou à un côté de caisse recouvrant ledit élément extérieur.

Selon un mode avantageux de l'invention, le profilé en aluminium ou en alliage d'aluminium présente une face latérale extérieure généralement plane, le renfort s'étendant contre ladite face.

Selon un mode avantageux de l'invention, un des au moins deux éléments creux formant le poteau est disposé latéralement du côté extérieur du véhicule et un autre desdits éléments est disposé latéralement du côté intérieur du véhicule, le renfort s'étendant entre la face latérale extérieure du profilé et l'élément extérieur.

Selon un mode avantageux de l'invention, le renfort comprend une ou plusieurs nervures aptes à rigidifier ledit renfort, ladite ou lesdits nervures étant formées par déformation d'un élément de tôle constituant le renfort.

Les mesures de l'invention sont intéressantes en ce qu'elles permettent de réaliser un renforcement efficace, simple et léger entre deux éléments en matériaux incompatibles d'un point de vue métallurgique.

D'autres caractéristiques et avantages de la présente invention seront mieux compris à l'aide de la description et des dessins parmi lesquels :
- La figure 1 est une vue en perspective d'un longeron droit, vu depuis sa face intérieure, selon l'état de la technique ;
- La figure 2 est une vue de côté du pied avant du longeron de la figure 1, illustrant un phénomène de déversement en cas de choc à l'avant ;
- La figure 3 est une vue éclatée de la partie avant du longeron d'une structure conforme à l'invention ;
- La figure 4 est une vue de côté de la zone de liaison entre le longeron et le pied avant de la structure de la figure 3, sans le côté de caisse et sans l'élément creux extérieur du pied avant.

La figure 1 a été décrite dans la partie relative à l'état de la technique.

La figure 2 est une vue de profil de la partie avant du longeron de la figure 1, illustrant le phénomène de rotulage et de déversement constaté en cas de transmission d'efforts par la voie supérieure en cas d'impact à l'avant du véhicule. En effet, en cas d'impact à l'avant du véhicule, une partie des efforts de l'impact est transmise par l'élément 116 relié à la partie supérieure du pied ou poteau avant 108. Il s'agit de la voie supérieure de transmission d'effort. Une autre partie des efforts peut être transmise par la roue avant (non représentée) prenant appui sur l'extrémité avant du longeron 104. Il s'agit de la voie inférieure. Un embouti d'habillage formant un côté de caisse 114 recouvre le longeron 104 et le pied avant 108.

Les efforts transmis par l'élément 116 exercent un couple de flexion au bas du pied avant 108, ce couple sollicitant la liaison entre le pied avant 108 et le longeron, plus précisément le profilé en aluminium (non visible à la figure 2 mais bien à la figure 1). Ce couple de flexion est susceptible de déverser le pied avant vers l'arrière, comme cela est représenté en trait pointillé à la figure 2. Un tel déversement est à éviter si l'on désire conserver une certaine intégrité de l'habitacle du véhicule.

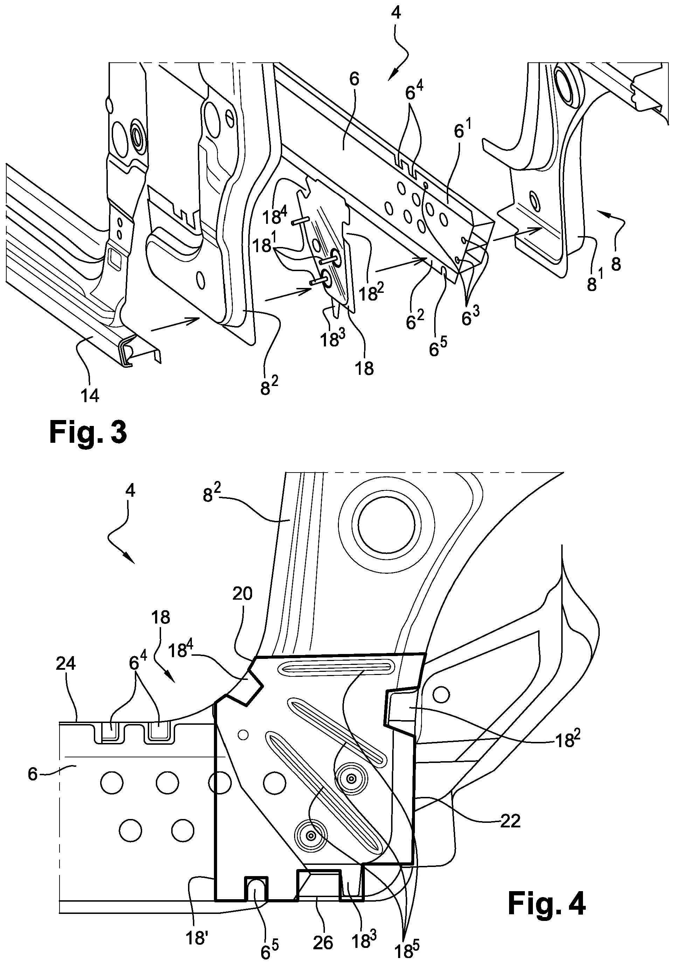

Les figures 3 et 4 illustrent l'avant du longeron d'une structure conforme à l'invention, apportant une solution au problème de déversement mentionné ci-avant.

La figure 3 est une vue éclatée de la portion avant droite de la structure de véhicule, conforme à l'invention. Celle-ci comprend, essentiellement, un longeron 4 constitué par un profilé 6 en aluminium ou en alliage d'aluminium, un pied avant 8, un habillage de côté de caisse 14 et un renfort 18.

Le profilé 6 s'étend préférentiellement le long de la majorité du longeron. Il peut présenter une section constante, notamment obtenue par extrusion. Le matériau du profilé 6 peut être un alliage d'aluminium de la série 6000. Un tel profilé est particulièrement intéressant en ce qu'il est économique à réaliser. La longueur nécessaire peut par ailleurs être débitée d'une plus grande longueur du profilé.

Le profilé 6 présente une section formant un profil préférentiellement fermé, en l'occurrence un profil rectangulaire à deux chambres, et avec un bord libre supérieur 6¹ et un bord libre inférieur 6². Ces bords sont destinés à coopérer avec des bords correspondants des autres éléments constitutifs de la structure en vue de former des feuillures d'assemblage.

Le pied avant 8 est formé, essentiellement, par deux éléments creux en tôle d'acier, à savoir un premier élément creux 8¹ situé latéralement du côté intérieur du véhicule, et un deuxième élément creux 8² situé latéralement du côté extérieur du véhicule. Les creux de ces deux éléments se correspondent en vue de former un volume. Chacun des éléments creux 8¹ et 8² comprend des bords destinés à se superposer en vue de former des feuillures d'assemblage.

Le renfort 18 est disposé contre la face latérale du profilé en aluminium qui est dirigée vers l'extérieur du véhicule. Le renfort 18 comprend des orifices 18¹ destinés à coopérer avec des orifices correspondants 6³ réalisés dans le profilé 6, notamment au moyen de rivets. Il est toutefois à noter que d'autres moyens de fixation à caractère mécanique, c'est-à-dire compatibles pour une liaison entre des éléments en des matériaux incompatibles d'un point de vue métallurgique, sont envisageables. A titre d'exemple, le renfort 18 peut être vissé au profilé 6 et/ou présenter des surfaces d'engagement mécanique avec le profilé 6.

Le renfort 18 s'étend essentiellement verticalement et longitudinalement entre la face extérieure du profilé 6 et l'élément creux extérieur 8² du pied avant 8. Il est réalisé en tôle d'acier, notamment par emboutissage et détourage. Il comprend des bords libres destinés à se retrouver dans les feuillures d'assemblage du pied avant 8 et du longeron 4. Il peut alors être fixé audit élément creux extérieur au moyen de points de soudure électrique par résistance, au niveau de leurs bords libres respectifs.

La figure 4 est une vue de côté de la zone de liaison entre le longeron 4 et le pied avant 8 de la structure de la figure 3, sans le côté de caisse et sans l'élément creux extérieur du pied avant.

On peut observer aux figures 3 et 4 que les bords des éléments creux 8¹ et 8² du pied avant 8 forment une feuillure d'assemblage arrière 20 et une feuillure d'assemblage avant 22. On peut également observer à la figure 4 que le renfort 18 est présent dans la feuillure d'assemblage arrière 20, et plus précisément que le bord correspondant du renfort 18 présente une encoche 18⁴ permettant de joindre de manière directe et par soudure les bords des deux éléments creux 8¹ et 8². On peut également observer à la figure 4 que, similairement, le renfort 18 est également présent dans la feuillure d'assemblage avant 22, et plus précisément que le bord correspondant du renfort 18 présente une encoche 18² permettant de joindre de manière directe et par soudure les bords des deux éléments creux 8¹ et 8².

Les figures 3 et 4 montrent également que le bord supérieur 6¹ du profilé en aluminium 6 présente plusieurs encoches 6⁴ permettant au bord correspondant de l'élément creux intérieur 8¹ de contacter directement le bord en vis-à-vis de l'habillage 14 de côté de caisse, formant ainsi une feuillure d'assemblage supérieure 24. A cet effet, l'élément creux extérieur 8² du pied avant peut par ailleurs présenter également des encoches correspondantes.

Similairement, les figures 3 et 4 montrent également que le bord inférieur 6² du profilé en aluminium 6 présente une encoche 6⁵ permettant au bord correspondant de l'élément creux intérieur 8¹ de contacter directement le bord en vis-à-vis de l'habillage 14 de côté de caisse ou de l'élément creux extérieur 8².

Le renfort 18 est fixé à l'élément creux extérieur 8² du pied avant 8 par soudure à résistance électrique le long des feuillures arrière 20 et avant 22.

Le bord inférieur du renfort 18 peut présenter une ou plusieurs pattes 18³ s'étendant, préférentiellement essentiellement verticalement, dans une feuillure d'assemblage inférieure 26. Le bord correspondant d'un des éléments creux 8¹ et 8² du pied avant peut comprendre un ou plusieurs renfoncements aptes à recevoir la ou les pattes en question.

Le renfort 18 peut comprend des moulures ou nervures 18⁵ configurées pour le rigidifier. Elles sont préférentiellement venues de matière avec le renfort, plus préférentiellement réalisées par emboutissage d'une portion de tôle d'acier constituant le renfort.

La figure 4 illustre en trait plus épais un contour alternatif de renfort 18'. A la différence du renfort 18, le contour du renfort alternatif 18' s'étend davantage le long de la feuillure d'assemblage inférieure 26, à savoir vers l'arrière de cette feuillure, de manière à chevaucher l'encoche 6⁵ du profilé 6 et par exemple d'intégrer une fonction d'appui d'un cric de levage.

## Revendications

1. Structure de véhicule automobile, comprenant :
- au moins un longeron (4) de bas de caisse comprenant un profilé (6) en aluminium ou en alliage d'aluminium ;
- au moins un poteau (8) en tôle d'acier s'étendant essentiellement verticalement depuis le longeron (4), une portion dudit poteau recouvrant une portion correspondante du profilé ;
**caractérisée en ce qu'**elle comprend, en outre :
un renfort (18) en tôle d'acier s'étendant entre la portion du poteau (8) recouvrant le profilé (6) et la portion correspondante du profilé (6), ledit renfort (18) étant fixé par serrage et/ou engagement mécanique (18¹, 6³) au profilé (6) et par soudage au poteau (8).

2. Structure de véhicule automobile, conforme à la revendication 1, **caractérisée en ce que** le poteau est un poteau avant (8) s'étendant essentiellement verticalement depuis une extrémité avant du longeron (4).

3. Structure de véhicule automobile, conforme à l'une des revendications 1 et 2, **caractérisée en ce que** le renfort (18) s'étend majoritairement dans un plan vertical et longitudinal, ou formant un angle de moins de 10° avec chacune des directions verticale et longitudinale.

4. Structure de véhicule automobile, conforme à l'une des revendications 1 à 3, **caractérisée en ce que** le poteau (8) est formé par au moins deux éléments creux (8¹, 8²) assemblés l'un à l'autre le long de bords formant une feuillure d'assemblage avant (22) et une feuillure d'assemblage arrière (20), le renfort (18) s'étendant dans la feuillure avant (22) et/ou dans la feuillure arrière (20).

5. Structure de véhicule automobile, conforme à la revendication 4, **caractérisée en ce que** le renfort (18) comprend au moins une encoche (18², 18⁴) au niveau de la feuillure avant (22) et/ou de la feuillure arrière (20), les bords des au moins deux éléments creux (8¹, 8²) formant le poteau (8) étant directement soudés l'un à l'autre dans ladite ou au moins une desdites encoches (18², 18⁴).

6. Structure de véhicule automobile, conforme à l'une des revendications 4 et 5, **caractérisée en ce que** les bords des au moins deux éléments creux (8¹, 8²) formant le poteau (8) forment avec un bord inférieur (6²) du profilé (6) une feuillure d'assemblage inférieure (26), ledit bord (6²) du profilé (6) comprenant au moins une encoche (6⁵) et le renfort (18) comprenant au moins une patte (18³) s'étendant essentiellement verticalement dans ladite feuillure (26) en face de ladite ou desdites encoches (6⁵), respectivement, de manière à être soudée(s) à l'élément creux (8¹) du poteau (8) disposé du côté du bord (6²) du profilé (6) opposé au renfort (18).

7. Structure de véhicule automobile, conforme à l'une des revendications 4 à 6, **caractérisée en ce que** le profilé (6) comprend un bord supérieur (6¹) formant, avec les bords des éléments creux (8¹, 8²) formant le poteau (8), une feuillure d'assemblage supérieure (24), ledit bord (6¹) du profilé (6) comprenant au moins une encoche (6⁴) dans laquelle ou lesquelles le bord de l'élément creux (8¹) situé latéralement du côté intérieur est soudé directement à l'élément creux (8²) situé latéralement du côté extérieur ou à un côté de caisse (14) recouvrant ledit élément extérieur (8²).

8. Structure de véhicule automobile, conforme à l'une des revendications 1 à 7, **caractérisée en ce que** le profilé (6) en aluminium ou en alliage d'aluminium présente une face latérale extérieure généralement plane, le renfort (18) s'étendant contre ladite face.

9. Structure de véhicule automobile, conforme à l'une des revendications 4 à 7 et à la revendication 8, **caractérisée en ce qu'**un (8²) des au moins deux éléments creux (8¹, 8²) formant le poteau (8) est disposé latéralement du côté extérieur du véhicule et un autre (8¹) desdits éléments (8¹, 8²) est disposé latéralement du côté intérieur du véhicule, le renfort (18) s'étendant entre la face latérale extérieure du profilé (6) et l'élément extérieur (8²).

10. Structure de véhicule automobile, conforme à l'une des revendications 1 à 9, **caractérisée en ce que** le renfort (18) comprend une ou plusieurs nervures (18⁵) aptes à rigidifier ledit renfort, ladite ou lesdits nervures (18⁵) étant formées par déformation d'un élément de tôle constituant le renfort.

## Patentansprüche

1. Kraftfahrzeugstruktur, die Folgendes umfasst:
- mindestens eine Unterbodenschwelle (4), die ein Profil (6) aus Aluminium oder aus Aluminiumlegierung umfasst;
- mindestens eine Säule (8) aus Stahlblech, die sich im Wesentlichen vertikal von der Schwelle (4) erstreckt, wobei ein Abschnitt der Säule einen entsprechenden Abschnitt des Profils bedeckt;
**dadurch gekennzeichnet, dass** sie außerdem Folgendes umfasst:
eine Verstärkung (18) aus Stahlblech, die sich zwischen dem Abschnitt der Säule (8), die das Profil (6) bedeckt, und dem entsprechenden Abschnitt des Profils (6) erstreckt, wobei die Verstärkung (18) durch Drücken und/oder mechanisches Einfügen (18¹, 6³) an dem Profil (6) und durch Schweißen an der Säule (8) befestigt ist.

2. Kraftfahrzeugstruktur nach Anspruch 1, **dadurch gekennzeichnet, dass** der Säule eine vordere Säule (8) ist, die sich im Wesentlichen von einem vorderen Ende der Schwelle (4) ausgehend vertikal erstreckt.

3. Kraftfahrzeugstruktur nach einem der Ansprüche 1 und 2, **dadurch gekennzeichnet, dass** sich die Verstärkung (18) in der Hauptsache in einer vertikalen und Längsebene erstreckt oder einen Winkel von weniger als 10° mit jeder der vertikalen und Längsrichtung bildet.

4. Kraftfahrzeugstruktur nach einem der Ansprüche 1 bis 3, **dadurch gekennzeichnet, dass** die Säule (8) aus mindestens zwei Hohlelementen (8¹, 8²) gebildet ist, die aneinander entlang von Rändern, die einen hinteren Zusammenfügefalz (20) bilden, zusammengefügt sind, wobei sich die Verstärkung (18) in dem vorderen Falz (22) und/oder in dem hinteren Falz (20) erstreckt.

5. Kraftfahrzeugstruktur nach Anspruch 4, **dadurch gekennzeichnet, dass** die Verstärkung (18) mindestens eine Kerbe (18², 18⁴) im Bereich des vorderen Falzes (22) und/oder des hinteren Falzes (20) umfasst, wobei die Ränder der mindestens zwei Hohlelemente (8¹, 8²), die die Säule (8) bilden, direkt in der oder mindestens einer der Kerben (18², 18⁴) aneinander geschweißt sind.

6. Kraftfahrzeugstruktur nach einem der Ansprüche 4 und 5, **dadurch gekennzeichnet, dass** die Ränder der mindestens zwei Hohlelemente (8¹, 8²), die die Säule (8) bilden, mit einem unteren Rand (6²) des Profils (6) einen unteren Zusammenfügefalz (26) bilden, wobei der Rand (6²) des Profils (6) mindestens eine Kerbe (6⁵) umfasst, und die Verstärkung (18) mindestens eine Pratze (18³) umfasst, die sich im Wesentlichen vertikal in dem Falz (26) jeweils gegenüber der oder den Kerben (6⁵) erstreckt, so dass sie an das Hohlelement (8¹) der Säule (8) geschweißt sind, das auf der Seite des Rands (6²) des Profils (6), das der Verstärkung (18) entgegengesetzt ist, angeordnet ist.

7. Kraftfahrzeugstruktur nach einem der Ansprüche 4 bis 6, **dadurch gekennzeichnet, dass** das Profil (6) einen oberen Rand (6¹) bildet wobei die Ränder der Hohlelemente (8¹, 8²), die die Säule bilden (8), einen oberen Zusammenfügefalz (24) bilden, wobei der Rand (6¹) des Profils (6) mindestens eine Kerbe (6⁴) umfasst, in der oder in denen der Rand des Hohlelements (8₁), das sich seitlich auf der Innenseite befindet, direkt an das Hohlelement (8²) geschweißt ist, das seitlich auf der Außenseite oder an einer Seite des Unterbodens (14) liegt, die das äußere Element (8²) bedeckt.

8. Kraftfahrzeugstruktur nach einem der Ansprüche 1 bis 7, **dadurch gekennzeichnet, dass** das Profil (6) aus Aluminium oder aus Aluminiumlegierung eine äußere seitliche Fläche aufweist, die im Allgemeinen flach ist, wobei sich die Verstärkung (18) gegen die Fläche erstreckt.

9. Kraftfahrzeugstruktur nach einem der Ansprüche 4 bis 7 und nach Anspruch 8, **dadurch gekennzeichnet, dass** mindestens eines (8²) der zwei Hohlelemente (8¹, 8²), die die Säule (18) bilden, seitlich auf der Außenseite des Fahrzeugs angeordnet ist, und ein anderes (8₁) der Elemente (8¹, 8²) seitlich auf der Innenseite des Fahrzeugs angeordnet ist, wobei sich die Verstärkung (18) zwischen der seitlichen Außenfläche des Profils (6) und dem äußeren Element (8²) erstreckt.

10. Kraftfahrzeugstruktur nach einem der Ansprüche 1 bis 9, **dadurch gekennzeichnet, dass** die Verstärkung (18) eine oder mehr Rippen (18⁵) umfasst, die geeignet sind, die Verstärkung zu versteifen, wobei die Rippe oder Rippen (18⁵) durch Verformen eines Blechelements, das die Verstärkung bildet, gebildet ist (sind).

## Claims

1. A motor vehicle structure, including:
- at least one underbody sill (4) including a profiled section (6) made from aluminium or from aluminium alloy;
- at least one post (8) made from steel sheet extending substantially vertically from the sill (4), a portion of said post covering a corresponding portion of the profiled section;
**characterized in that** it furthermore includes:
a reinforcement (18) made from steel sheet extending between the portion of the post (8) covering the profiled section (6) and the corresponding portion of the profiled section (6), said reinforcement (18) being fixed by clamping and/or mechanical engagement (18¹, 6³) to the profiled section (6) and by welding to the post (8).

2. The motor vehicle structure, according to Claim 1, **characterized in that** the post is a front post (8) extending substantially vertically from a front end of the sill (4).

3. The motor vehicle structure, according to one of Claims 1 and 2, **characterized in that** the reinforcement (18) extends predominantly in a vertical and longitudinal plane, or forming an angle of less than 10° with each of the vertical and longitudinal directions.

4. The motor vehicle structure, according to one of Claims 1 to 3, **characterized in that** the post (8) is formed by at least two hollow elements (8¹, 8²) assembled one to the other along edges forming a front assembling rabbet (22) and a rear assembling rabbet (20), the reinforcement (18) extending in the front rabbet (22) and/or in the rear rabbet (20).

5. The motor vehicle structure, according to Claim 4, **characterized in that** the reinforcement (18) includes at least one notch (18², 18⁴) at the level of the front rabbet (22) and/or of the rear rabbet (20), the edges of the at least two hollow elements (8¹, 8²) forming the post (8) being directly welded to one another in said or at least one of said notches (18², 18⁴).

6. The motor vehicle structure, according to one of Claims 4 and 5, **characterized in that** the edges of the at least two hollow elements (8¹, 8²) forming the post (8) form with a lower edge (6²) of the profiled section (6) a lower assembling rabbet (26), said edge (6²) of the profiled section (6) including at least one notch (6⁵) and the reinforcement (18) including at least one lug (18³) extending substantially vertically in said rabbet (26) in front of said notch (es) (6⁵), respectively, so as to be welded to the hollow element (8¹) of the post (8) disposed on the edge (6²) side of the profiled section (6) opposite the reinforcement (18) .

7. The motor vehicle structure, according to one of Claims 4 to 6, **characterized in that** the profiled section (6) includes an upper edge (6¹) forming, with the edges of the hollow elements (8¹, 8²) forming the post (8), an upper assembling rabbet (24), said edge (6¹) of the profiled section (6) including at least one notch (6⁴) in which the edge of the hollow element (8¹) situated laterally of the interior side is welded directly to the hollow element (8²) situated laterally of the exterior side or to a body side (14) covering said exterior element (8²).

8. The motor vehicle structure, according to one of Claims 1 to 7, **characterized in that** the profiled section (6) made from aluminium or from aluminium alloy has a generally planar exterior lateral face, the reinforcement (18) extending against said face.

9. The motor vehicle structure, according to one of Claims 4 to 7 and to Claim 8, **characterized in that** one (8²) of the at least two hollow elements (8¹, 8²) forming the post (8) is disposed laterally of the exterior side of the vehicle and another (8¹) of said elements (8¹, 8²) is disposed laterally of the interior side of the vehicle, the reinforcement (18) extending between the exterior lateral face of the profiled section (6) and the exterior element (8²).

10. The motor vehicle structure, according to one of Claims 1 to 9, **characterized in that** the reinforcement (18) includes one or more ribs (18⁵) able to stiffen said reinforcement, said rib(s) (18⁵) being formed by deformation of a sheet metal element constituting the reinforcement.
